# EUROPEAN PATENT SPECIFICATION

(11) **EP 4 120 639 B1**
(45) Date of publication and mention of the grant of the patent: **14.02.2024**
(21) Application number: 20929650.8
(22) Date of filing: 30.03.2020
(51) Int. Cl.: G06F 3/01

(54) **INFORMATION PROCESSING DEVICE AND INFORMATION PROCESSING SYSTEM**
INFORMATIONSVERARBEITUNGSVORRICHTUNG UND INFORMATIONSVERARBEITUNGSSYSTEM
DISPOSITIF DE TRAITEMENT DE L'INFORMATION ET SYSTÈME DE TRAITEMENT DE L'INFORMATION

(43) Date of publication of application: 18.01.2023
(73) Proprietor: Sony Group Corporation, Tokyo 108-0075 (JP)
(72) Inventor: TAKURA, Kento, Tokyo 140-0002 (JP); INUI, Tasuku, Tokyo 140-0002 (JP)
(74) Representative: D Young & Co LLP
(86) International application number: PCT/JP2020/014502
(87) International publication number: WO 2021/199131

(56) References cited:
- WO-A1-2019/073802
- WO-A1-2020/050186
- JP-A- 2018 141 816
- JP-A- 2019 515 541
- JP-A- 2019 518 393
- JP-A- 2020 025 210
- JP-A- 2020 042 369
- US-A1- 2020 035 005
- QUALCOMM INCORPORATED: "Proposed Updates to TR26.918 based on AHVIC-215", 3GPP DRAFT; AHVIC-220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Telco; 20191119 5 December 2019 (2019-12-05), XP051837643, Retrieved from the Internet: URL:https://ftp.3gpp.org/tsg_sa/WG4_CODEC/ Ad-hoc_video_codec/Docs/AHVIC-220.zip AHVIC-220 - Updates to TR 26.928 - based on AHVIC-215.docx [retrieved on 2019-12-05]
- "3rd Generation Partnership Project; Technical Specification Group Services and System Aspects; 5G enhanced mobile broadband; Media distribution (Release 16)", 3GPP DRAFT; TR26891-141-CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 November 2018 (2018-11-23), XP051500189, Retrieved from the Internet: URL:http://www.3gpp.org/ftp/tsg%5Fsa/WG4%5 FCODEC/TSGS4%5F101%5FBusan/Docs/S4%2D18152 3%2Ezip [retrieved on 2018-11-23]

## Description

### Technical Field

The present technology relates to an information processing apparatus and an information processing system that are related to slicing.

### Background Art

In recent years, a game that is played by a mobile apparatus being connected to a network using a mobile communication system has become widespread. For example, Patent Literature 1 discloses a method for updating, using a mobile apparatus, a multiplayer gaming session executed by the mobile apparatus being connected to a communication system.

### Citation List

### Patent Literature

Patent Literature 1: Japanese Unexamined Patent Application Publication No. 2010-539765
Patent Literature 2: US 2020/035005 A1
Patent Literature 3: WO 2020/050186 A1

### Non-patent Literature

Non-patent Literature 1: QUALCOMM INCORPORATED: "Proposed Updates to TR26.918 based on AHVIC-215", 3GPP DRAFT; AHVIC-220, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. SA WG4, no. Telco; 20191119 5 December 2019
Non-patent Literature 2: "3rd Generation Partnership Project; Technical Specification Group Services and System Aspects; 5G enhanced mobile broadband; Media distribution (Release 16)", 3GPP DRAFT; TR26891-141-CL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 23 November 2018

### Disclosure of Invention

### Technical Problem

However, the connection with a network as disclosed in Patent Literature 1 has been performed using a best-effort communication. The best-effort communication may cause, for example, data loss or data delay depending on a communication condition, and this may result in being unable to play a game smoothly.

In view of the circumstances described above, it is an object of the present technology to provide an information processing apparatus and an information processing system that make it possible to play a game smoothly while using a mobile communication system. Solution to Problem

The present disclosure is defined by the claims.

### Brief Description of Drawings

[Fig. 1] Fig. 1 schematically illustrates an information processing system according to an embodiment of the present technology.
[Fig. 2] Fig. 2 schematically illustrates a slice formed in the information processing system.
[Fig. 3] Fig. 3 schematically illustrates a region specified in the information processing system.
[Fig. 4] Fig. 4 schematically illustrates a region specified in the information processing system.
[Fig. 5] Fig. 5 is a block diagram illustrating a hardware configuration of a server apparatus included in the information processing system.

### Mode(s) for Carrying Out the Invention

### [Overall Configuration of Information Processing System]

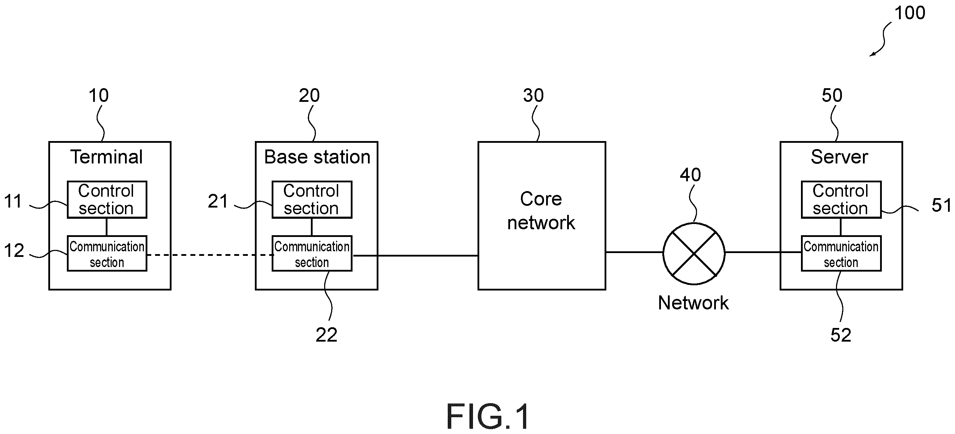

Fig. 1 is a block diagram illustrating an overall configuration of an information processing system 100 according to an embodiment of the present technology. As illustrated in the figure, the information processing system 100 includes a terminal 10, a base station 20, a core network 30, a network 40, and a server apparatus 50.

The terminal 10 is a terminal that can communicate with the base station 20 using the 5th generation mobile communication system (5G), and can be augmented reality (AR) glasses. Further, the terminal 10 is not limited to AR glasses, and it is sufficient if the terminal 10 is a 5G-compliant terminal. The terminal 10 includes a control section 11 and a communication section 12, and the communication section 12 communicates with a communication section 22 under the control of the control section 11.

The base station 20 forms a radio access network (RAN), and provides wireless communication services to at least one terminal 10. The base station 20 can wirelessly communicate with the terminal 10 in accordance with a wireless communication scheme based on New Radio (NR), which is a standard that succeeds Long Term Evolution (LTE). The base station 20 includes a control section 21 and the communication section 22, and the communication section 22 communicates with the communication section 12 under the control of the control section 21. Further, the communication section 22 is connected to the network 40 through the core network 30.

The core network 30 is a network that connects an exchanger connected to a control apparatus of the base station 20, and another exchanger, and includes, for example, the Mobility Management Entity (MME), the Serving Gateway (S-GW), and the Packet Data Network Gateway (P-GW).

The network 40 is a computer network that connects a plurality of information processing apparatuses, and is, for example, the Internet. Further, the network 40 may be formed in the core network 30.

The server apparatus 50 is connected to the terminal 10 through the network 40, the core network 30, and the base station 20, and provides services to the terminal 10. The server apparatus 50 includes a control section 51 and a communication section 52, and the communication section 52 communicates with the communication section 22 through the network 40 and the core network 30 under the control of the control section 51.

### [Regarding New Radio (NR)]

The NR has two features. A first feature is providing an enhanced massive communication using a frequency band of from 6 GHz up to 100 GHz, and a second feature is efficiently accommodating a plurality of types of communications for various use cases.

Here, examples of the plurality of types of communications include enhanced Mobile Broadband (eMBB), Ultra-Reliable and Low Latency Communications (URLLC), and massive Machine Type Communication (mMTC). Accommodating the plurality of types of communications in a single network using the NR is discussed.

In the case of LTE, the Evolved Packet Core (EPC) is adopted as a communication technology for the core network 30. New Core is discussed as a successor of the EPC. There is a need to efficiently accommodate the plurality of types of communications described above and to keep down CAPEX/OPEX (capital expenditure, operational expenditure) by adopting New Core.

However, it is difficult to provide physically separate networks for the respective types of communications in order to provide the plurality of types of communications, while keeping down CAPEX/OPEX. Thus, operating a plurality of logical networks corresponding to the plurality of types of communications in a physically single network, and flexibly modifying a capacity of the logical network according to a demand for communication traffic for each type of communication, are discussed.

It is conceivable that, for this purpose, each node (that is, communication equipment) of the core network could be implemented as a virtual machine, and an operation of the node depending on a target type of communication could be virtually performed for each logical network. The reason is that, with respect to a function that is implemented using a virtual machine, the number of functions can be increased or reduced according to an increase or a reduction in a demand for communication, and the number of calculator resources assigned for each function can be increased or decreased.

Using a virtual network technology, the function implemented using a virtual machine is connected to another function to create a network. There is a technology called OpenFlow that is an example of such a virtual network technology, in which a rule for each switch is distributed by a central controller, and the switch is operated according to the rule distributed by the controller. OpenFlow enables a flexible network operation by freely switching a switch that connects functions implemented using virtual machines.

A technology that provides logical networks having different properties by combining a virtual machine and a virtual network technology such as OpenFlow, as described above, is called slicing.

### [Regarding Slicing]

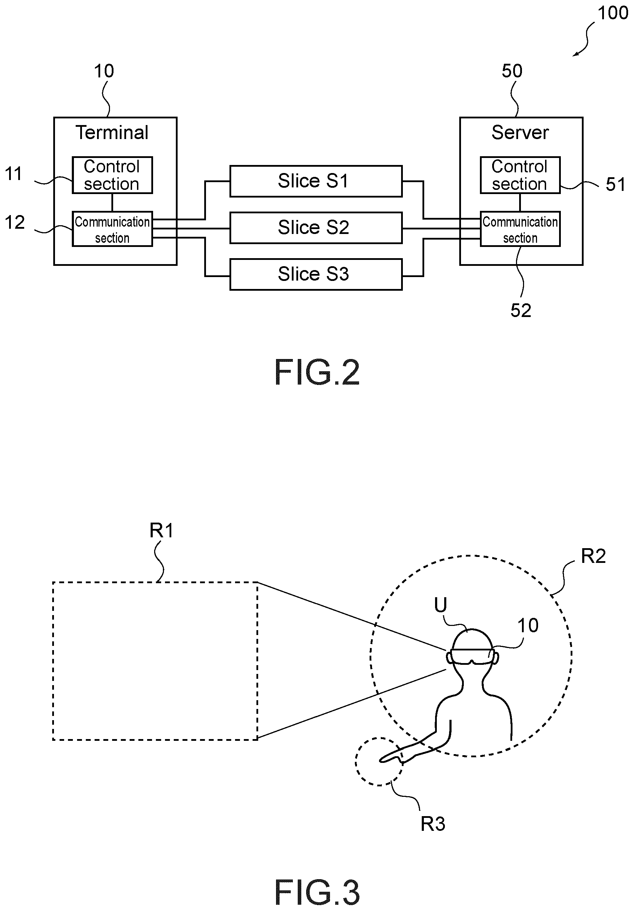

Fig. 2 schematically illustrates slicing in the information processing system 100. As illustrated in the figure, a plurality of slices is formed between the terminal 10 and the server apparatus 50 in a single physical network using slicing. The plurality of slices formed in the information processing system 100 is hereinafter referred to as a "slice S1", a "slice S2", and a "slice S3".

The slice S1 is a slice that is given a highest communication priority, and the slice S2 is a slice that is given a medium communication priority. The slice S3 is a slice that is given a lowest communication priority. The communication priority indicates a degree of priority for communication, and it can be said that a slice with a higher communication priority has a higher communication rate.

Table 1 is a table in which information regarding mapping to a slice in the information processing system 100 is given. As given in Table 1, the slice S1 is a logical network for a high-capacity and low-latency communication, and is, for example, a logical network for eMBB. The slice S2 is a logical network for a low-latency communication, and is, for example, a logical network for URLLC. The slice S3 can be a logical network for a best-effort communication.

**[Table 1]**

| | |
|---|---|
| Slice S1 | High capacity and low latency |
| Slice S2 | Low latency |
| Slice S3 | Best effort |

Note that mapping to a slice is not limited to what is given in Table 1, and it is sufficient if the slice S1 is given a communication priority with a highest rate, the slice S2 is given a medium communication priority, and the slice S3 is given a communication priority with a lowest rate.

As described above, logically independent networks that can provide communication services different from each other are provided in a single physical network. Slicing makes it possible to flexibly provide logical networks having different uses. Further, slicing makes it possible to flexibly modify a capacity of each slice by increasing or decreasing the number of calculator resources assigned to a virtual machine and by changing switching.

Note that each slice may be formed between the terminal 10 and the server apparatus 50 through a RAN formed by the base station 20, the core network 30, and the network 40. Further, each slice may be formed only in the RAN and the core network 30, or may be formed only in the core network 30. Furthermore, the number of slices is not limited to three, and may be two, or four or more.

Further, an identifier called Single-Network Slice Selection Assistance Information (S-NSSAI) is assigned to data communicated between the terminal 10 and the server apparatus 50, and the terminal 10, the RAN, and the core network 30 can determine, using this identifier, which slice is to be used to communicate the data.

### [Operation of Information Processing System]

An operation of the information processing system 100 is described. Fig. 3 schematically illustrates the operation of the information processing system 100. As illustrated in the figure, a user U is wearing the terminal 10, which is AR glasses.

Content is provided to the terminal 10 by the server apparatus 50 through the RAN formed by the base station 20, the core network 30, and the network 40. The content forms a virtual space. The content is content that presents a video, sound, and a sense of touch, and is, for example, an augmented reality (AR) game. Note that the virtual space also includes what is superimposed on a real space in an AR game.

As illustrated in Fig. 3, the control section 11 specifies a gaze region R1, an audible region R2, and a contact region R3 in a virtual space.

The gaze region R1 is a region that is specified on the basis of a line of sight of the user U, and is, for example, a region toward which the line of sight of the user U is oriented. The control section 11 detects an orientation of the terminal 10 using, for example, an acceleration sensor, a global navigation satellite system (GNSS), and a gyroscope, and further detects the line of sight of the user U by tracking the line of sight using, for example, a camera. Accordingly, the gaze region R1 can be specified.

When, for example, a specified period of time has elapsed since the line of sight of the user U was oriented toward a specific location, the control section 11 can specify a region centered at the location as the gaze region R1. A size of the gaze region R1 is not particularly limited, but it is favorable that the gaze region R1 have a size corresponding to a field of view of the user U. The size of the gaze region R1 can be changed according to a distance between the gaze region R1 and the user U.

The audible region R2 is a region that is specified on the basis of a distance from the terminal 10, and can be, for example, a region that is situated within a specified distance from the terminal 10. The control section 11 specifies a location of the terminal 10 using, for example, a result of position measurement performed by a GNSS, and can specify a region centered at the location as the audible region R2. A size of the audible region R2 is not particularly limited, but it is favorable that the audible region R2 have a size corresponding to a range in which sound is audible to the user U. The audible region R2 can be, for example, a region that is situated within 2 m from the terminal 10.

The contact region R3 is a region that is specified on the basis of a distance from a body of the user U, and can be, for example, a region that is situated within a specified distance from a finger of the user U. The body of the user U is, for example, a finger of the user U. The control section 11 specifies a location of the body of the user U using, for example, a result of position measurement performed by a GNSS and a result of image recognition processing performed by, for example, a camera, and can specify a region centered at the location as the contact region R3. A size of the contact region R3 is not particularly limited, but it is favorable that the contact region R3 have a size corresponding to a range in which the user U can come into contact with a target. The contact region R3 can be, for example, a region that is situated within a few centimeters from the body of the user U.

The communication section 12 transmits the gaze region R1, the audible region R2, and the contact region R3 being specified by the control section 11 to the server apparatus 50 through the RAN formed by the base station 20, the core network 30, and the network 40.

In the server apparatus 50, when the communication section 52 receives the gaze region R1, the audible region R2, and the contact region R3 from the communication section 12 through the network, the control section 51 maps information included in content (hereinafter referred to as five-sense information) to each slice on the basis of the specified regions. Table 2 indicated below is a table in which the priority of the five-sense information is given.

**[Table 2]**

| Five-sense information / Priority | High | Low |
|---|---|---|
| Visual information | Within gaze region R1 | Outside of gaze region R1 |
| Auditory information | Within audible region R2 | Outside of audible region R2 |
| Tactile information | Within contact region R3 | Outside of contact region R3 |

As given in Table 2, with respect to visual information included in content, the visual information displayed within the gaze region R1 is given a high priority, and the visual information displayed outside of the gaze region R1 is given a low priority. The reason is that the gaze region R1 is a region at which the user U is gazing and thus there is a need to display a highly accurate video at as high a rate as possible, whereas the line of sight of the user is not oriented toward a region situated outside of the gaze region R1 and thus there is no need to do so.

Further, with respect to auditory information included in the content, the auditory information for which a sound source is situated within the audible region R2 is given a high priority, and the auditory information for which a sound source is situated outside of the audible region R2 is given a low priority. The reason is that sound for which a sound source is situated within the audible region R2 is clearly audible to the user U and thus there is a need to produce high-quality sound, whereas sound for which a sound source is situated outside of the audible region R2 is not clearly audible to the user U and thus there is no need to do so.

Furthermore, with respect to tactile information included in the content, a contact target that is situated within the contact region R3 is given a high priority, and a contact target that is situated outside of the contact region R3 is given a low priority. The contact target is, for example, a virtual object included in the content. When the contact target is situated within the contact region R3, the user U can come into contact with the contact target and thus there is a need to cause a sense of touch to occur. On the other hand, when the contact target is situated outside of the contact region R3, the user U never comes into contact with the contact target and thus there is no need to do so.

Thus, the control section 51 maps, to the slices S1 to S3, five-sense information that is included in the content, as given in Table 3 indicated below.

**[Table 3]**

| Five-sense information | Slice S1 | Slice S2 | Slice S3 |
|---|---|---|---|
| Visual information | Within gaze region R1 | - | Outside of gaze region R1 |
| Auditory information | - | Within audible region R2 | Outside of audible region R2 |
| Tactile information | - | Within contact region R3 | Outside of contact region R3 |

As given in Table 3, from among the pieces of visual information included in the content, the control section 51 maps, to the slice S1, the piece of visual information depicted within the gaze region R1, and maps, to the slice S3, the piece of visual information depicted outside of the gaze region R1.

Further, from among the pieces of auditory information included in the content, the control section 51 maps, to the slice S2, the piece of auditory information for which a sound source is situated within the audible region R2, and maps, to the slice S3, the piece of auditory information for which a sound source is situated outside of the audible region R2.

Furthermore, from among the pieces of tactile information included in the content, the control section 51 maps, to the slice S2, the piece of tactile information corresponding to a contact target situated within the contact region R3, and maps, to the slice S3, the piece of tactile information corresponding to a contact target situated outside of the contact region R3.

The control section 51 assigns, to each piece of five-sense information, an identifier (such as the S-NSSAI described above) that indicates a slice used for communication. In other words, the control section 51 assigns an identifier indicating the slice S1 to the visual information depicted within the gaze region R1. Further, the control section 51 assigns an identifier indicating the slice S2 to the auditory information for which a sound source is situated within the audible region R2 and to the tactile information corresponding to a contact target situated within the contact region R3. Furthermore, the control section 51 assigns an identifier indicating the slice S3 to the visual information depicted outside of the gaze region R1, to the auditory information for which a sound source is situated outside of the audible region R2, and to the tactile information corresponding to a contact target situated outside of the contact region R3. Note that mapping of each piece of five-sense information to a slice does not necessarily have to be performed by the server apparatus 50, but may be performed by the terminal 10, the base station 20, or the core network 30 using an identifier.

The control section 51 provides the communication section 52 with each piece of five-sense information that is assigned an identifier, as described above. The communication section 52 transmits each piece of five-sense information to the communication section 12 through the network 40, the core network 30, and the RAN formed by the base station 20. In all of or a portion of these communication networks, each piece of five-sense information is transmitted using a slice indicated by an identifier. In other words, visual information situated within the gaze region R1 is transmitted using the slice S1, and auditory information situated within the audible region R2 and tactile information situated within the contact region R3 are transmitted using the slice S2. Further, visual information situated outside of the gaze region R1, auditory information situated outside of the audible region R2, and tactile information situated outside of the contact region R3 are transmitted using the slice S3.

When the communication section 12 receives each piece of five-sense information from the communication networks, the control section 11 presents the piece of five-sense information to the user U. In other words, the control section 11 outputs the visual information to a display, and outputs the auditory information from a speaker. Further, the control section 11 outputs the tactile information from a tactile device that is worn on, for example, a finger.

### [Effects Provided by Information Processing System]

As described above, in the information processing system 100, visual information, auditory information, and tactile information that are included in content are transmitted using the slices S1 to S3. Since the visual information situated within the gaze region R1 is transmitted using the slice S1 given a highest communication priority, the visual information situated within the gaze region R1 is displayed at a high rate. This enables the user U to quickly visually confirm the visual information situated within the gaze region R1.

Further, auditory information situated within the audible region R2 and tactile information situated within the contact region R3 are transmitted using the slice S2 given a second-highest communication priority. These pieces of information are given a lower priority than the visual information, and their data amounts are relatively small. Thus, it is favorable that these pieces of information be transmitted using the slice S2.

Furthermore, visual information situated outside of the gaze region R1, auditory information situated outside of the audible region R2, and tactile information situated outside of the contact region R3 are transmitted using the slice S3 given a lowest communication priority. These pieces of information are not perceived by the user U at once. Thus, it is favorable that these pieces of information be transmitted using the slice S3.

As described above, the information processing system 100 makes it possible to transmit five-sense information included in content to the terminal 10 using a suitable slice according to the type of information and the possibility that a user will perceive the information, and thus to efficiently use a communication line and improve an experience of a user.

### [Regarding Specifying Region Using Biological Signal]

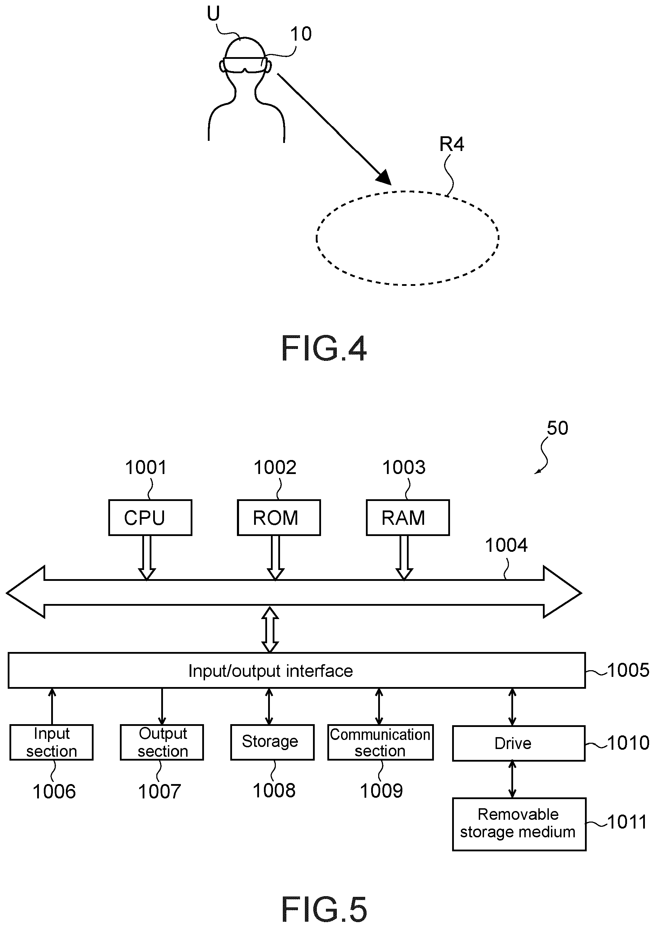

As described above, the terminal 10 specifies the gaze region R1, the audible region R2, and the contact region R3 on the basis of, for example, a line of sight of the user U and a distance from the user U. However, the terminal 10 may specify, using a biological signal, a region in which the user U has an interest. Fig. 4 schematically illustrates a region (hereinafter referred to as a region of interest) R4 in which the user U has an interest.

Specifically, the terminal 10 includes a sensor that can detect brain waves, and can specify the region of interest R4 in which the user has an interest, on the basis of output from the sensor. Further, the terminal 10 may specify the region of interest R4 on the basis of a biological signal obtained from a biological phenomenon such as pulse, breathing, or sweating of the user U in addition to brain waves.

When the terminal 10 transmits the region of interest R4 to the server apparatus 50, the control section 51 maps, to a slice such as the slice S1 given a high communication priority, five-sense information that is included in content and corresponds to the region of interest R4. The information corresponding to the region of interest R4 is, for example, visual information that is displayed within the region of interest R4 and auditory information for which a sound source is situated within the region of interest R4. Further, the control section 51 maps, to a slice such as the slice S3 given a low communication priority, five-sense information that is included in the content and does not correspond to the region of interest R4.

The communication section 52 assigns an identifier to each piece of five-sense information according to a result of the mapping, and transmits the piece of five-sense information to the communication section 12. This enables five-sense information corresponding to the region of interest R4 to be presented to the user using a slice given a high communication priority.

### [Regarding Other Users]

Further, the information processing system 100 enables a virtual object such as a costume or an effect to be superimposed on a person within sight of the user U. Here, the server apparatus 50 can select an optimal slice from the slices S1 to S3 when the server apparatus 50 transmits, to the terminal 10, visual information regarding such a virtual object.

Specifically, the control section 51 specifies a player who is playing the same game as the user U using, for example, position information obtained by a GNSS, and maps, to a slice such as the slice S1 given a high communication priority, visual information regarding a virtual object superimposed on the player. Further, the control section 51 maps, to a slice such as the slice S3 given a low communication priority, visual information regarding a virtual object superimposed on a player who is not playing the same game as the user U. The control section 51 assigns, to visual information regarding a virtual object, an identifier that indicates a slice used for transmission.

The communication section 52 transmits visual information regarding a virtual object, which is assigned an identifier, to the communication section 12 through the network 40, the core network 30, and the RAN formed by the base station 20. This enables a virtual object to be preferentially superimposed on the user playing the same game as the user U. For example, a virtual object of which a data amount is large may be superimposed on a user who is playing the same game, and a virtual object of which a data amount is small may be superimposed on a user who is playing a different game.

Further, depending on a point given to each user, the control section 51 may select a slice that transmits an advertisement. The control section 51 can give each user a point according to, for example, having good or bad manners, a level, a play time, or a charging amount. With respect to a user who is given a large amount of points, the control section 51 can map information necessary for gaming to a slice given a high communication priority, and can map an advertisement to a slice given a low communication priority.

Furthermore, with respect to a user who is given a small amount of points, the control section 51 can map information necessary for gaming to a slice given a low communication priority, and can map an advertisement to a slice given a high communication priority. The control section 51 assigns, to visual information regarding a virtual object, an identifier that indicates a slice used for transmission.

The communication section 52 transmits visual information regarding a virtual object, which is assigned an identifier, to the communication section 12 through the network 40, the core network 30, and the RAN formed by the base station 20. This enables an advertisement to be less likely to be visible to a user who is given a larger amount of points.

### [Modifications]

The embodiment in which the information processing system 100 is used in the AR has been described above. However, the information processing system 100 may be used in the VR. Further, the information processing system 100 may have a configuration in which at least one of visual information, auditory information, or tactile information is mapped to a slice according to a region and transmitted, as described above.

### [Hardware Configuration]

A hardware configuration of the server apparatus 50 is described. Fig. 5 schematically illustrates a hardware configuration of the server apparatus 50.

As illustrated in the figure, the server apparatus 50 includes a central processing unit (CPU) 1001. An input/output interface 1005 is connected to the CPU 1001 via a bus 1004. A read only memory (ROM) 1002 and a random access memory (RAM) 1003 are connected to the bus 1004.

An input section 1006, an output section 1007, a storage 1008, and a communication section 1009 are connected to the input/output interface 1005. The input section 1006 includes input devices such as a keyboard and a mouse that are used by a user to input an operation command. The output section 1007 outputs a processing operation screen and an image of a processing result to a display device. The storage 1008 includes, for example, a hard disk drive that stores therein a program and various data. The communication section 1009 includes, for example, a local area network (LAN) adapter, and performs communication processing through a network as represented by the Internet. Further, a drive 1010 is connected to the input/output interface 1005. The drive 1010 reads data from and writes data into a removable storage medium 1011 such as a magnetic disk, an optical disk, a magneto-optical disk, or a semiconductor memory.

The CPU 1001 performs various processes in accordance with a program stored in the ROM 1002, or in accordance with a program that is read from the removable storage medium 1011 such as a magnetic disk, an optical disk, a magneto-optical disk, or a semiconductor memory to be installed on the storage 1008, and is loaded into the RAM 1003 from the storage 1008. Data necessary for the CPU 1001 to perform various processes is also stored in the RAM 1003 as necessary.

In the server apparatus 50 having the configuration described above, the series of processes described above is performed by the CPU 1001 loading, for example, a program stored in the storage 1008 into the RAM 1003 and executing the program via the input/output interface 1005 and the bus 1004.

For example, the program executed by the server apparatus 50 can be provided by being recorded in the removable storage medium 1011 serving as, for example, a package medium. Further, the program can be provided via a wired or wireless transmission medium such as a local area network, the Internet, or digital satellite broadcasting.

In the server apparatus 50, the program can be installed on the storage 1008 via the input/output interface 1005 by the removable storage medium 1011 being mounted on the drive 1010. Further, the program can be received by the communication section 1009 via the wired or wireless transmission medium to be installed on the storage 1008. Moreover, the program can be installed in advance on the ROM 1002 or the storage 1008.

Note that the program executed by the server apparatus 50 may be a program in which processes are chronologically performed in the order of the description in the present disclosure, or may be a program in which processes are performed in parallel or a process is performed at a necessary timing such as a timing of calling.

All of the hardware configuration of the server apparatus 50 does not have to be included in a single apparatus, and the server apparatus 50 may include a plurality of apparatuses. Further, a portion of or all of the hardware configuration of the server apparatus 50 may be included in a plurality of apparatuses connected to each other via a network.

### Reference Signs List

- 10: terminal
- 11: control section
- 12: communication section
- 20: base station
- 21: control section
- 22: communication section
- 30: core network
- 40: network
- 50: server apparatus
- 51: control section
- 52: communication section
- 100: information processing system

## Claims

1. An information processing apparatus (50), comprising:
a control section (51) configured to map information included in content to a plurality of slices on a basis of a region that is specified by a terminal (10) in a virtual space, and assigns, to the information, an identifier that indicates the slice used for communication; and
a communication section (52) configured to transmit the information to the terminal through a communication network, wherein
information that corresponds to the region is assigned a first identifier indicating the slice given a high communication priority; and
information that does not correspond to the region is assigned a second identifier indicating the slice given a low communication priority.

2. The information processing apparatus according to claim 1, wherein
the region is a region that is specified on a basis of a line of sight of a user who is wearing the terminal, and
the control section is configured to map visual information included in the content to the plurality of slices.

3. The information processing apparatus according to claim 2, wherein
the region is a region toward which the line of sight of the user is oriented,
the control section is configured to map the visual information depicted within the region to the slice given a high communication priority, and
the control section is configured to map the visual information depicted outside of the region to the slice given a low communication priority.

4. The information processing apparatus according to claim 1, wherein
the region is a region that is specified on a basis of a distance from the terminal, and
the control section is configured to map auditory information included in the content to the plurality of slices.

5. The information processing apparatus according to claim 4, wherein
the region is a region that is situated within a specified distance from the terminal,
the control section is configured to map, to the slice given a high communication priority, the auditory information for which a sound source is situated within the region, and
the control section is configured to map, to the slice given a low communication priority, the auditory information for which a sound source is situated outside of the region.

6. The information processing apparatus according to claim 1, wherein
the region is a region that is specified on a basis of a distance from a body of a user who is wearing the terminal, and
the control section is configured to map tactile information included in the content to the plurality of slices.

7. The information processing apparatus according to claim 6, wherein
the region is a region that is situated within a specified distance from the body of the user,
the control section is configured to map, to the slice given a high communication priority, the tactile information corresponding to a contact target situated within the region, and
the control section is configured to map, to the slice given a low communication priority, the tactile information corresponding to a contact target situated outside of the region.

8. The information processing apparatus according to claim 1, wherein
the region includes a first region, a second region, and a third region,
the plurality of slices includes a first slice, a second slice, and a third slice, the first slice being given a high communication priority with a high rate, the second slice being given a lower communication priority than the first slice, the third slice being given a lower communication priority than the second slice, and
the control section is configured to
map visual information depicted within the first region to the first slice,
map visual information depicted outside of the first region to the third slice,
map, to the second slice, auditory information for which a sound source is situated within the second region,
map, to the third slice, auditory information for which a sound source is situated outside of the second region,
map, to the second slice, tactile information corresponding to a contact target situated within the third region, and
map, to the third slice, tactile information corresponding to a contact target situated outside of the third region.

9. An information processing system (100), comprising:
a terminal (10) that includes a first control section (11) and a first communication section (12), the first control section (11) being configured to specify a region in a virtual space, the first communication section (12) being configured to transmit the specified region through a communication network; and
a server (50) apparatus that includes a second communication section (52) and a second control section (51), the second communication section (52) being configured to receive the region through the communication network, the second control section (51) being configured to map information included in content to a plurality of slices on a basis of the region, the second control section (51) being configured to assign, to the information, an identifier that indicates the slice used for communication, the second communication section (51) being configured to transmit the information to the first communication section (12) through the communication network, wherein
information that corresponds to the region is assigned a first identifier indicating the slice given a high communication priority; and
information that does not correspond to the region is assigned a second identifier indicating the slice given a low communication priority.

10. The information processing system according to claim 9, wherein
the terminal further includes a sensor that is configured to measure a biological signal of a user who is wearing the terminal, and
the first control section is configured to specify the region on a basis of output from the sensor.

## Patentansprüche

1. Informationsverarbeitungsvorrichtung (50), umfassend:
einen Steuerabschnitt (51), der konfiguriert ist, um Informationen, die in Inhalt eingeschlossen sind, einer Vielzahl von Slices auf einer Basis eines Bereichs zuzuordnen, der durch ein Endgerät (10) in einem virtuellen Raum spezifiziert ist, und den Informationen eine Kennung zuweist, die den Slice angibt, der für eine Kommunikation verwendet wird; und
einen Kommunikationsabschnitt (52), der konfiguriert ist, um die Informationen durch ein Kommunikationsnetzwerk an das Endgerät zu übertragen, wobei
Informationen, die dem Bereich entsprechen, eine erste Kennung zugewiesen wird, die angibt, dass dem Slice eine hohe Kommunikationspriorität gegeben wird; und
Informationen, die nicht dem Bereich entsprechen, eine zweite Kennung zugewiesen wird, die angibt, dass dem Slice eine niedrige Kommunikationspriorität gegeben wird.

2. Informationsverarbeitungsvorrichtung nach Anspruch 1, wobei
der Bereich ein Bereich ist, der auf einer Basis einer Sichtlinie eines Benutzers spezifiziert wird, der das Endgerät trägt, und
der Steuerabschnitt konfiguriert ist, um visuelle Informationen, die in dem Inhalt eingeschlossen sind, der Vielzahl von Slices zuzuordnen.

3. Informationsverarbeitungsvorrichtung nach Anspruch 2, wobei
der Bereich ein Bereich ist, in dessen Richtung die Sichtlinie des Benutzers ausgerichtet ist,
der Steuerabschnitt konfiguriert ist, um die visuellen Informationen, die innerhalb des Bereichs dargestellt sind, dem Slice zuzuordnen, dem eine hohe Kommunikationspriorität gegeben wird, und
der Steuerabschnitt konfiguriert ist, um die visuellen Informationen, die außerhalb des Bereichs dargestellt werden, dem Slice zuzuordnen, dem eine niedrige Kommunikationspriorität gegeben wird.

4. Informationsverarbeitungsvorrichtung nach Anspruch 1, wobei
der Bereich ein Bereich ist, der auf einer Basis eines Abstands von dem Endgerät spezifiziert wird, und
der Steuerabschnitt konfiguriert ist, um Hörinformationen, die in dem Inhalt eingeschlossen sind, der Vielzahl von Slices zuzuordnen.

5. Informationsverarbeitungsvorrichtung nach Anspruch 4, wobei
der Bereich ein Bereich ist, der sich innerhalb eines spezifizierten Abstands von dem Endgerät befindet,
der Steuerabschnitt konfiguriert ist, um dem Slice, dem eine hohe Kommunikationspriorität gegeben wird, die Hörinformationen zuzuordnen, für die sich eine Tonquelle innerhalb des Bereichs befindet, und
der Steuerabschnitt konfiguriert ist, um dem Slice, dem eine niedrige Kommunikationspriorität gegeben wird, die Hörinformationen zuzuordnen, für die sich eine Tonquelle außerhalb des Bereichs befindet.

6. Informationsverarbeitungsvorrichtung nach Anspruch 1, wobei
der Bereich ein Bereich ist, der auf einer Basis eines Abstands von einem Körper eines Benutzers spezifiziert wird, der das Endgerät trägt, und
der Steuerabschnitt konfiguriert ist, um taktile Informationen, die in dem Inhalt eingeschlossen sind, der Vielzahl von Slices zuzuordnen.

7. Informationsverarbeitungsvorrichtung nach Anspruch 6, wobei
der Bereich ein Bereich ist, der sich innerhalb eines spezifizierten Abstands von dem Körper des Benutzers befindet,
der Steuerabschnitt konfiguriert ist, um dem Slice, dem eine hohe Kommunikationspriorität gegeben wird, die taktilen Informationen zuzuordnen, die einem Kontaktziel entsprechen, das sich innerhalb des Bereichs befindet, und
der Steuerabschnitt konfiguriert ist, um dem Slice, dem eine niedrige Kommunikationspriorität gegeben wird, die taktilen Informationen zuzuordnen, die einem Kontaktziel entsprechen, das sich außerhalb des Bereichs befindet.

8. Informationsverarbeitungsvorrichtung nach Anspruch 1, wobei
der Bereich einen ersten Bereich, einen zweiten Bereich und einen dritten Bereich einschließt,
die Vielzahl von Slices einen ersten Slice, einen zweiten Slice und einen dritten Slice einschließt, wobei dem ersten Slice eine hohe Kommunikationspriorität mit einer hohen Rate gegeben wird, dem zweiten Slice eine niedrigere Kommunikationspriorität als dem ersten Slice gegeben wird, dem dritten Slice eine niedrigere Kommunikationspriorität als dem zweiten Slice gegeben wird, und
der Steuerabschnitt konfiguriert ist zum
Zuordnen visueller Informationen, die innerhalb des ersten Bereichs dargestellt sind, zu dem ersten Slice,
Zuordnen visueller Informationen, die außerhalb des ersten Bereichs dargestellt sind, zu dem dritten Slice,
Zuordnen, zu dem zweiten Slice, von Hörinformationen, für die sich eine Tonquelle innerhalb des zweiten Bereichs befindet,
Zuordnen, zu dem dritten Slice, von Hörinformationen, für die sich eine Tonquelle außerhalb des zweiten Bereichs befindet,
Zuordnen, zu dem zweiten Slice, von taktilen Informationen, die einem Kontaktziel entsprechen, das sich innerhalb des dritten Bereichs befindet, und
Zuordnen, zu dem dritten Slice, von taktilen Informationen, die einem Kontaktziel entsprechen, das sich außerhalb des dritten Bereichs befindet.

9. Informationsverarbeitungssystem (100),
umfassend:
ein Endgerät (10), das einen ersten Steuerabschnitt (11) und einen ersten Kommunikationsabschnitt (12) einschließt, wobei der erste Steuerabschnitt (11) konfiguriert ist, um einen Bereich in einem virtuellen Raum zu spezifizieren, wobei der erste Kommunikationsabschnitt (12) konfiguriert ist, um den spezifizierten Bereich durch ein Kommunikationsnetzwerk zu übertragen; und
eine Vorrichtung eines Servers (50), die einen zweiten Kommunikationsabschnitt (52) und einen zweiten Steuerabschnitt (51) einschließt, wobei der zweite Kommunikationsabschnitt (52) konfiguriert ist, um den Bereich durch das Kommunikationsnetzwerk zu empfangen, wobei der zweite Steuerabschnitt (51) konfiguriert ist, um Informationen, die in Inhalt enthalten sind, einer Vielzahl von Slices auf einer Basis des Bereichs zuzuordnen, wobei der zweite Steuerabschnitt (51) konfiguriert ist, um den Informationen eine Kennung zuzuweisen, die den Slice angibt, der für die Kommunikation verwendet wird, wobei der zweite Kommunikationsabschnitt (51) konfiguriert ist, um die Informationen an den ersten Kommunikationsabschnitt (12) durch das Kommunikationsnetzwerk zu übertragen, wobei
Informationen, die dem Bereich entsprechen, eine erste Kennung zugewiesen wird, die angibt, dass dem Slice eine hohe Kommunikationspriorität gegeben wird; und
Informationen, die nicht dem Bereich entsprechen, eine zweite Kennung zugewiesen wird, die angibt, dass dem Slice eine niedrige Kommunikationspriorität gegeben wird.

10. Informationsverarbeitungssystem nach Anspruch 9, wobei
das Endgerät ferner einen Sensor einschließt, der konfiguriert ist, um ein biologisches Signal eines Benutzers zu messen, der das Endgerät trägt, und
der erste Steuerabschnitt konfiguriert ist, um den Bereich auf einer Basis einer Ausgabe von dem Sensor zu spezifizieren.

## Revendications

1. Appareil de traitement d'informations (50), comprenant :
une section de commande (51) configurée pour mapper des informations incluses dans un contenu à une pluralité de tranches en fonction d'une région qui est spécifiée par un terminal (10) dans un espace virtuel, et attribue, aux informations, un identificateur qui indique la tranche utilisée pour communication ; et
une section de communication (52) configurée pour transmettre les informations au terminal par l'intermédiaire d'un réseau de communication, dans lequel
des informations qui correspondent à la région se voient attribuer un premier identificateur indiquant la tranche bénéficiant d'une priorité de communication élevée ; et
des informations qui ne correspondent pas à la région se voient attribuer un second identificateur indiquant la tranche bénéficiant d'une priorité de communication basse.

2. Appareil de traitement d'informations selon la revendication 1, dans lequel
la région est une région qui est spécifiée en fonction d'une ligne de vue d'un utilisateur qui est en train de porter le terminal, et
la section de commande est configurée pour mapper des informations visuelles incluses dans le contenu à la pluralité de tranches.

3. Appareil de traitement d'informations selon la revendication 2, dans lequel
la région est une région vers laquelle la ligne de vue de l'utilisateur est orientée,
la section de commande est configurée pour mapper les informations visuelles représentées au sein de la région à la tranche bénéficiant d'une priorité de communication élevée, et
la section de commande est configurée pour mapper les informations visuelles représentées à l'extérieur de la région à la tranche bénéficiant d'une priorité de communication basse.

4. Appareil de traitement d'informations selon la revendication 1, dans lequel
la région est une région qui est spécifiée en fonction d'une distance par rapport au terminal, et
la section de commande est configurée pour mapper des informations sonores incluses dans le contenu à la pluralité de tranches.

5. Appareil de traitement d'informations selon la revendication 4, dans lequel
la région est une région qui est située au sein d'une distance spécifiée par rapport au terminal,
la section de commande est configurée pour mapper, à la tranche bénéficiant d'une priorité de communication élevée, les informations sonores pour lesquelles une source de son est située au sein de la région, et
la section de commande est configurée pour mapper, à la tranche bénéficiant d'une priorité de communication basse, les informations sonores pour lesquelles une source de son est située à l'extérieur de la région.

6. Appareil de traitement d'informations selon la revendication 1, dans lequel
la région est une région qui est spécifiée en fonction d'une distance par rapport à un corps d'un utilisateur qui est en train de porter le terminal, et
la section de commande est configurée pour mapper des informations tactiles incluses dans le contenu à la pluralité de tranches.

7. Appareil de traitement d'informations selon la revendication 6, dans lequel
la région est une région qui est située au sein d'une distance spécifiée par rapport au corps de l'utilisateur,
la section de commande est configurée pour mapper, à la tranche bénéficiant d'une priorité de communication élevée, les informations tactiles correspondant à une cible de contact située au sein de la région, et
la section de commande est configurée pour mapper, à la tranche bénéficiant d'une priorité de communication basse, les informations tactiles correspondant à une cible de contact située à l'extérieur de la région.

8. Appareil de traitement d'informations selon la revendication 1, dans lequel
la région comporte une première région, une deuxième
région et une troisième région,
la pluralité de tranches comporte une première tranche, une deuxième tranche et une troisième tranche, la première tranche bénéficiant d'une priorité de communication élevée avec un débit élevé, la deuxième tranche bénéficiant d'une priorité de communication plus basse que la première tranche, la troisième tranche bénéficiant d'une priorité de communication plus basse que la deuxième tranche, et
la section de commande est configurée pour
mapper des informations visuelles représentées au sein de la première région à la première tranche,
mapper des informations visuelles représentées à l'extérieur de la première région à la troisième tranche,
mapper, à la deuxième tranche, des informations sonores pour lesquelles une source de son est située au sein de la deuxième région,
mapper, à la troisième tranche, des informations sonores pour lesquelles une source de son est située à l'extérieur de la deuxième région,
mapper, à la deuxième tranche, des informations tactiles correspondant à une cible de contact située au sein de la troisième région, et
mapper, à la troisième tranche, des informations tactiles correspondant à une cible de contact située à l'extérieur de la troisième région.

9. Système de traitement d'informations (100),
comprenant :
un terminal (10) qui comporte une première section de commande (11) et une première section de communication (12), la première section de commande (11) étant configurée pour spécifier une région dans un espace virtuel, la première section de communication (12) étant configurée pour transmettre la région spécifiée par l'intermédiaire d'un réseau de communication ; et
un appareil serveur (50) qui comporte une seconde section de communication (52) et une seconde section de commande (51), la seconde section de communication (52) étant configurée pour recevoir la région par l'intermédiaire du réseau de communication, la seconde section de commande (51) étant configurée pour mapper des informations incluses dans un contenu à une pluralité de tranches en fonction de la région, la seconde section de commande (51) étant configurée pour attribuer, aux informations, un identificateur qui indique la tranche utilisée pour communication, la seconde section de communication (51) étant configurée pour transmettre les informations à la première section de communication (12) par l'intermédiaire du réseau de communication, dans lequel
des informations qui correspondent à la région se voient attribuer un premier identificateur indiquant la tranche bénéficiant d'une priorité de communication élevée ; et
des informations qui ne correspondent pas à la région se voient attribuer un second identificateur indiquant la tranche bénéficiant d'une priorité de communication basse.

10. Système de traitement d'informations selon la revendication 9, dans lequel
le terminal comporte en outre un capteur qui est configuré pour mesurer un signal biologique d'un utilisateur qui est en train de porter le terminal, et
la première section de commande est configurée pour spécifier la région en fonction d'une sortie provenant du capteur.
